# EUROPEAN PATENT APPLICATION

(11) **EP 4 729 311 A1**
(43) Date of publication of application: **22.04.2026**
(21) Application number: 25204073.8
(22) Date of filing: 23.09.2025
(51) Int. Cl.: B60C 23/00

(54) **A WHEEL HUB ASSEMBLY**

(30) Priority: 15.10.2024 US 202418915478
(71) Applicant: ArvinMeritor Technology, LLC, Troy, MI 48084 (US)
(72) Inventor: Hackett, Bryan, Davisburg (US); Edwards, William, Portland (US)
(74) Representative: Anderson, Nicola Unity

(57) **Abstract**

A wheel hub assembly for a non-drive axle of a vehicle, the wheel hub assembly comprising a wheel flange for rotatably supporting a tire with respect to a vehicle chassis; a spindle for supporting the wheel flange with respect to the chassis; and an air flow path for supplying pressurised air from an air supply to said tire. The spindle is rotatable with the wheel flange with respect to the chassis; and a section of the air flow path is defined by the spindle.

## Description

### FIELD OF THE INVENTION

The present invention relates to a wheel hub assembly for a vehicle.

### BACKGROUND OF THE INVENTION

It is known to provide a tire inflation system for the tires of a non-drive axle of a vehicle. A tire inflation system is used to keep tires correctly inflated for a particular application, in order to reduce wear and improve fuel economy. The need for tire pressure inspection is advantageously reduced, as tire pressure can be automatically controlled. The risk of tire blowouts can be significantly reduced.

In such a system, pressurised air, e.g. from a pressurised air supply, travels along an air flow path through the axle to the wheel hub assembly, and so to an inlet valve of the tire. Air must therefore be transferred from a non-rotating component to a rotating component of the wheel hub assembly. Typically, the wheel hub assembly includes a rotary union through which air can be transmitted as needed. Air is then passed through tire hoses and to the tire inlet valve. The air is filtered at a point along the air flow path to reduce contaminants and unwanted moisture in the air. Air flow is controlled by e.g. a tire inflation ECU or a mechanical regulator.

In such known arrangements, the air flow path passes through a fixed spindle of the wheel hub assembly and then through a rotary union positioned outboard of the spindle. Mounting the rotary union to the more exposed, outboard, side of the spindle increases the risk of damage to the rotary union. Such damage could lead to air being drained from the tire inflation system. Complicated and difficult drilling of air channels through the fixed spindle may be required in order to provide the air path through the components of the wheel hub assembly. Complicated air-to-oil sealing may be required to avoid leakage of air into components such as bearings.

The present invention seeks to mitigate the problems of the prior art.

### SUMMARY OF THE INVENTION

A first aspect of the invention provides a wheel hub assembly for a non-drive axle of a vehicle, the wheel hub assembly comprising a wheel flange for rotatably supporting a tire with respect to a vehicle chassis; a spindle for supporting the wheel flange with respect to the chassis; and an air flow path for supplying pressurised air from an air supply to said tire. The spindle is rotatable with the wheel flange with respect to the chassis; and a section of the air flow path is defined by the spindle.

The air flow path being at least partially defined by a rotatable or floating spindle allows the interface between rotating and non-rotating components along the air flow path to be at a different point than with a fixed spindle. As a result, the interface can advantageously be simplified. For example, less complex air-to-oil sealing may be required. A rotary union can be positioned in a more protected location, e.g. between the rotatable spindle and a steering knuckle rather than between the spindle and the wheel flange.

The air flow path may extend between an inboard end and an outboard end of the spindle.

The air flow path extending the full length of the spindle, i.e. between the inboard and outboard ends of the spindle, avoids the need for an alternative path through the wheel hub assembly, and so advantageously simplifies the air flow path and its construction.

The spindle may define a body extending inboard of the wheel flange. The spindle body may define a chamber. A section of the air flow path may be defined by the chamber.

Providing a hollow spindle, or at least a substantially hollow part of the spindle, simplifies the creation of an air flow path through the spindle. The need for complicated air-to-oil sealing can be reduced. Advantageously, the amount of material used in the spindle is reduced, reducing weight and production cost.

The assembly may comprise a wheel hub, wherein the wheel hub is configured to be non-rotatable with respect to the chassis; and wherein the spindle body is rotatably supported by the hub.

The chassis may comprise a steering knuckle or brake mounting flange, wherein the spindle is rotatable with respect to the steering knuckle or brake mounting flange, and wherein the wheel hub is configured to be secured to the steering knuckle or brake mounting flange, such that the wheel hub is fixed in relation to the steering knuckle or brake mounting flange.

The spindle body may be substantially cylindrical.

An inboard end of the spindle body may be open, such that the spindle body defines an aperture at an inboard end thereof.

Manufacture of the spindle, in particular of the spindle with an air flow path defined thereby, is thus made easier. The open cylinder shape of the body, in addition to providing a suitable shape for interaction with the remainer of the wheel hub assembly, e.g. the spindle body being supported by the wheel hub, enables access to the interior of the spindle chamber and so improves ease of manufacture.

The spindle may comprise a cap for sealing the aperture, wherein the cap is rotatable with the spindle.

The cap may define a section of the air flow path.

The cap provides sealing of the spindle chamber, whilst allowing pressurised air to pass therethrough.

The spindle body may comprise an inboard end face, and the cap may extend over the inboard end face.

Additional sealing can be provided by the extension of the cap over the end of the spindle body.

The assembly may comprise a seal between the cap and the inboard end face.

The seal may be an O ring.

The inclusion of an additional seal between the cap and the inboard end face of the spindle body further reduces the risk of air escaping the air flow path.

The wheel hub may comprise a roller bearing configured to rotatably support the spindle within the wheel hub, and the cap may extend over an inboard end of an inner part of the roller bearing.

The cap extending over the bearing further improves sealing and so reduces the risk of air escaping the air flow path. Using the cap to provide this further sealing advantageously limits the number of additional components required.

The chassis may comprise a steering knuckle or brake mounting flange, wherein the spindle is rotatable with respect to the steering knuckle or brake mounting flange. The assembly may further comprise a seal between the spindle and the steering knuckle or brake mounting flange.

The seal may be between the cap and the steering knuckle or brake mounting flange.

Providing a seal between the spindle and the steering knuckle or brake mounting flange allows sealed rotation between the two components.

The steering knuckle may comprise an outboard extension, and the seal may be located between the outboard extension and the spindle.

The seal may be resiliently biased in a radially outward direction.

The seal may be resiliently biased in a radially inward direction.

Radial resilient biasing of the seal enables effective sealing to take place despite wear of the seal.

The seal may comprise a resilient biasing component.

The resilient biasing component may be a cantilever spring.

Alternatively, the resilient biasing component may be a coil spring.

A cantilever spring or a coil spring provides a suitable resilient bias to the seal.

The assembly may further comprise a rotary union between the spindle and the chassis.

The rotary union may be inboard of the spindle.

The chassis may comprise a steering knuckle or brake mounting flange, wherein the spindle is rotatable with respect to the steering knuckle, and the rotary union may be between the spindle and the steering knuckle or brake mounting flange.

The spindle may comprise a cap, and the rotary union may be between the cap and the steering knuckle or brake mounting flange.

The rotary union being located between the spindle and the chassis enables relative rotation of the spindle with respect to the chassis. Location of the rotary union inboard of the spindle provides protection and reduces the likelihood of damage to the rotary union.

The rotary union may define a section of the air flow path.

The air flow path passing through the rotary union provides a simple route for air flow, and reduces the need for complicated drilling of components during manufacture.

The wheel hub assembly may be for a heavy vehicle. For example, the wheel hub assembly may be for a heavy truck.

The wheel hub assembly may be for a medium duty vehicle. For example, the wheel hub assembly may be for a medium duty truck.

### BRIEF DESCRIPTION OF THE DRAWINGS

Figure 1 is a perspective view of a wheel hub assembly according to a first embodiment;
Figure 2 is a cross sectional view through the centre line of the wheel hub assembly of Figure 1;
Figure 3 is an exploded view of the wheel hub assembly of Figures 1 and 2;
Figure 4 is a partial cross-sectional view through the wheel hub assembly of Figures 1 and 2;
Figure 5 is a perspective cross-sectional view through a seal for the wheel hub assembly of the embodiment of Figures 1-4;
Figure 6 is a cross-sectional view through the centre line of a wheel hub assembly of a further embodiment;
Figure 7 is an exploded view of the wheel hub assembly of Figure 6; and
Figure 8 is a partial cross-sectional view through the wheel hub assembly of Figures 6 and 7.

### DETAILED DESCRIPTION OF EMBODIMENT(S)

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

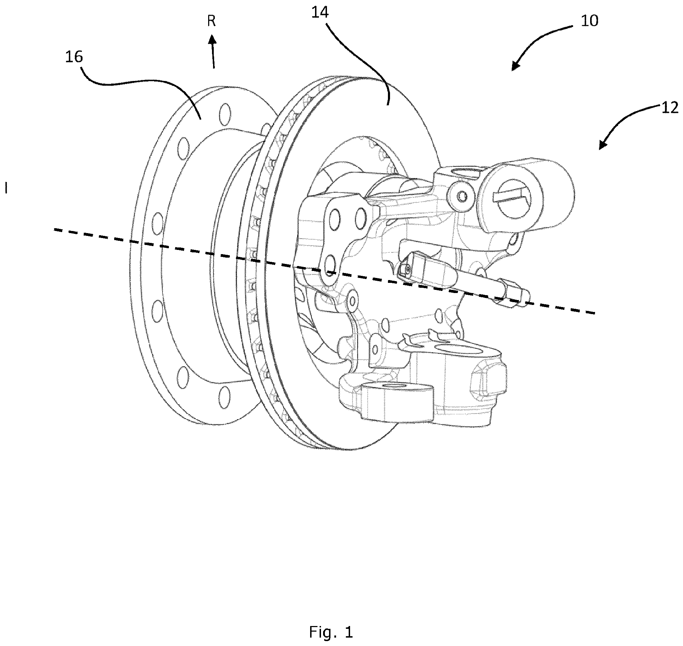

With reference to Figure 1, a wheel hub assembly of the present teachings is indicated generally at 10. Various orientations of the wheel hub assembly 10 are described. In particular, the directions inboard I and outboard O refer to the typical orientation of the wheel hub assembly 10 when fitted to a vehicle and with reference to the longitudinal centre line of the vehicle. The radial direction R refers to an orientation with reference to the centre of a brake rotor 14 and a wheel flange 16 (axis A-A).

The wheel hub assembly 10 of this embodiment is of the type for a non-drive axle of a vehicle. In particular, the wheel hub assembly is suitable for a non-drive axle of a heavy vehicle such as a truck, bus or coach. The wheel hub assembly of this embodiment is also suitable for a light or medium vehicle, e.g. a car or a light duty "pickup" truck.

The wheel hub assembly 10 is for rotatably supporting a tire (not shown) with respect to the vehicle. Figure 1 shows a steering knuckle 12 by which the wheel hub assembly 10 is supported on the vehicle chassis (not shown). The steering knuckle 12 connects the wheel hub assembly to the vehicle suspension and steering systems. A tire is rotatably supported on the wheel hub assembly by the wheel flange 16.

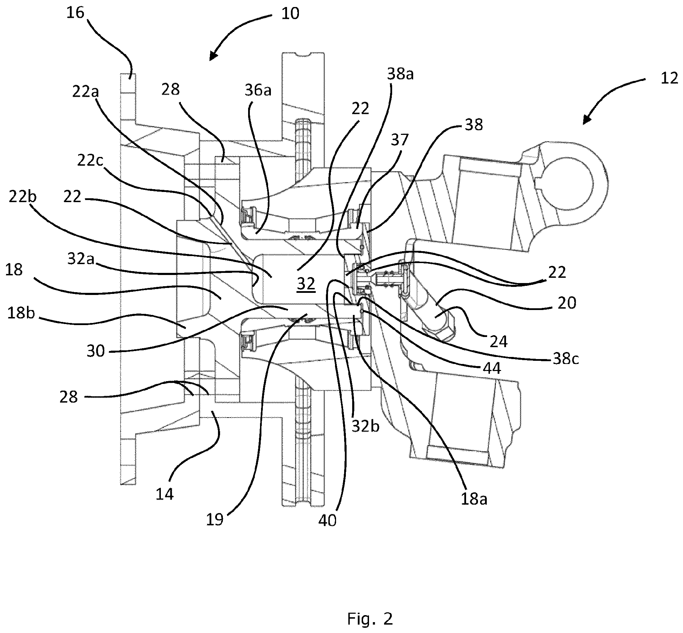

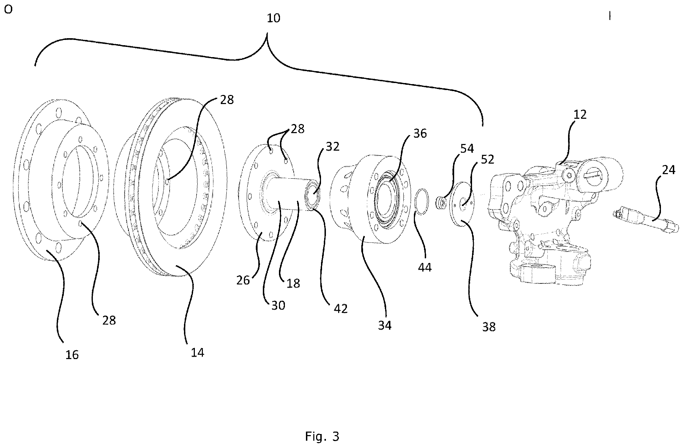

With reference now to Figures 2 and 3, the wheel hub assembly 10 includes a spindle 18. The spindle 18 supports the wheel flange 16 on the chassis. In this embodiment, the spindle 18 supports the wheel flange 16 on the steering knuckle 12.

The spindle 18 is rotatable with respect to the steering knuckle 12, and so is rotatable with respect to the chassis. That is, the spindle 18 is rotatable with the wheel flange 16.

The spindle 18 of this embodiment also supports the rotor 14. The spindle 18 includes a radial flange 26 to which the rotor 14 and the wheel flange 16 are secured. Each of the spindle flange 26, the rotor 14 and the wheel flange 16 defines a series of apertures 28 configured for alignment with one another. Each aperture 28 is configured to receive a bolt (not shown) by means of which the wheel flange 16 and the rotor 14 are secured to the spindle flange 26. The spindle 18 is thus rotatable with the rotor 14 and the wheel flange 16.

In this embodiment, there is provided a tire inflation system 20 by which pressurised air can be supplied to a tire supported on the wheel flange 16. The wheel hub assembly 10 includes an air flow path 22 by which pressurised air can flow from an air supply (not shown) to the tire. Pressurised air enters the air flow path 22 via an inlet hose 24. In this embodiment, pressurised air flows from the pressurised air supply through the axle (not shown), and so to the inlet hose 24.

The flow path 22 passes through the spindle 18. That is, a section 22a, 22b of the flow path is defined by the spindle 18.

As the air flow path 22 is provided through a spindle 18 that rotates with the tire, supplying air from the spindle 18 to the tire is made easier. There is no requirement for a rotary union between components outboard of the spindle 18, meaning that any rotary union required can be more protected and less exposed.

In this embodiment, the spindle 18 has an inboard end 18a and an outboard end 18b. The air flow path 22 of this embodiment extends from the inboard end 18a to the outboard end 18b of the spindle 18. As shown in Figure 2, the air flow path 22 has an outlet 22c at the outboard end 18b of the spindle 18. The outboard end 18b is outboard of the spindle flange 26 to which the rotor 14 and the wheel flange 16 are secured. The rotor 14 and the wheel flange 16 are secured outboard of the spindle flange 26. As the air flow path 22 extends to the outboard end 18b of the spindle, outboard of the spindle flange 26, air can be simply supplied to an inlet valve of the tire from the air flow path 22.

Providing the air flow path 22 from the spindle 18 from one end to the other avoids the need for the air flow path to bypass the spindle 18. The need for complicated drilling of the wheel hub assembly components during manufacture is reduced.

As shown in Figures 2 and 3, the spindle 18 of this embodiment has a body 30 extending in inboard of the flange 26. In this embodiment, the body 30 is in the form of a cylindrical tube, i.e. defined by a cylindrical wall 19. In an alternative embodiment, the interior of the body is of some other suitable shape.

The body 30 defines an air chamber 32 that forms a section 22b of the air flow path 22. The chamber 32 is substantially closed at an outboard end 32a thereof. The chamber 32 is open at an inboard end 32b.

The spindle 22 is thus substantially hollow. Advantageously, providing such a chamber, or a hollow spindle, allows at least a portion of the air path 22 to be defined by the spindle in a simple and effective manner, reducing the need for complicated drilling following casting or forging of the spindle 18.

The air flow path 22 includes an air passage extending from the chamber 32 to the outboard end 18b of the spindle 18, i.e. to the outlet 22c as described above. The passage 22a is formed by drilling. In contrast to the prior art, drilling a single passage 22a from the outboard end 18b of the spindle to the chamber 32 is relatively simple.

The wheel hub assembly 10 includes a wheel hub 34. The wheel hub 34 is fixed in relation to the steering knuckle 12. The spindle 18 is rotatably supported by the wheel hub 34. In this embodiment, the body 30 of the spindle 18 is rotatably received within the wheel hub 34 in order to support the spindle 18.

The wheel hub 34 includes a bearing 36 to provide the rotatable relationship between the spindle 18 and the wheel hub 34. In this embodiment, the bearing 36 is a roller bearing. In other embodiments some other suitable bearing is provided.

The spindle 18 of this embodiment includes a cap 38 by which the open end 32b of the chamber 32 is closed. The cap 38 defines an aperture 40 that forms part of the air flow path, so that pressurised air can access the chamber 32. In this embodiment, the spindle body 30 defines an inboard end face 42. The cap 38 extends over the inboard end face 42 to create a seal. In this embodiment, a seal 44 is provided between the cap 38 and the inboard end face 42. In this embodiment, the seal is an O ring. In alternative embodiments, some other suitable seal is provided.

The cap 38 extends over an inner part 36a of the roller bearing 36. That is, in this embodiment, the cap 38 extends over an inboard end 37 of the inner part 36a of the roller bearing 36. The inner part 36a of the roller bearing 36 is adjacent the spindle body 30 and rotates with the spindle body 30. The cap 38 is substantially circular in profile, so as to provide a seal to correspond with the inner part 36a of the roller bearing 36.

The cap 38 has a central portion in the form of a projection 38a axially projecting in an outboard direction. The projection 38a is substantially circular, and is of the same diameter as the chamber 32. The projection 38a extends outboard into the chamber 32, so as to radially locate the cap 38 with respect to the spindle 18.

In this embodiment, the projection 38a has an external thread 38c. A corresponding thread 38c is provided inside the wall 19 of the spindle 18. The cap 38 is secured to the spindle 18 by means of the thread 38c. In alternative embodiments, some alternative method of securing the cap to the spindle is provided. For example, the cap is secured to the spindle by means of an interference fit.

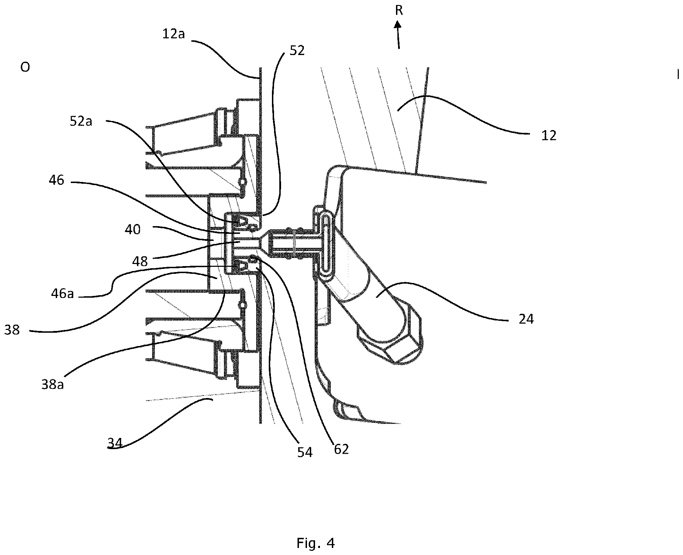

The steering knuckle 12 of this embodiment has an outboard face 12a to which the wheel hub 34 is secured. As shown in Figure 4, the steering knuckle 12 has a substantially cylindrical outboard projection 46. The outboard projection 46 defines a through bore 48 which forms part of the air flow path 22. The inlet hose 24 connects the bore 48 to the inboard air flow path and thereby to the air supply. The hose 24 extends through the steering knuckle 12.

The cap 38 defines on its inboard side a central and substantially circular recess 52. The projection 46 extends within the recess 52. A seal 54 is provided between the cap 38 and the outboard projection 46 of the steering knuckle 12. The seal 54 is received in the recess 52 of the cap 38. In this embodiment, the seal 54 provides sealing between an interior wall 52a of the recess 52 and an external wall 46a of the projection 46. In this embodiment, the seal is of a rubber based material. In an alternative embodiment, the seal is of a thermoplastic polymer. In alternative embodiments, the seal is of some other suitable material.

In order to ensure sealing between the steering knuckle 12 and the spindle 18 via the cap 38, the seal 54 is resiliently biased in a radial direction. In this embodiment, the seal 54 is radially biased in both an outboard and inward radial direction. That is, the seal 54 is biased radially outwardly, towards the interior wall 52a of the recess 52; and is biased radially inwardly, towards the external face 46a of the projection 46.

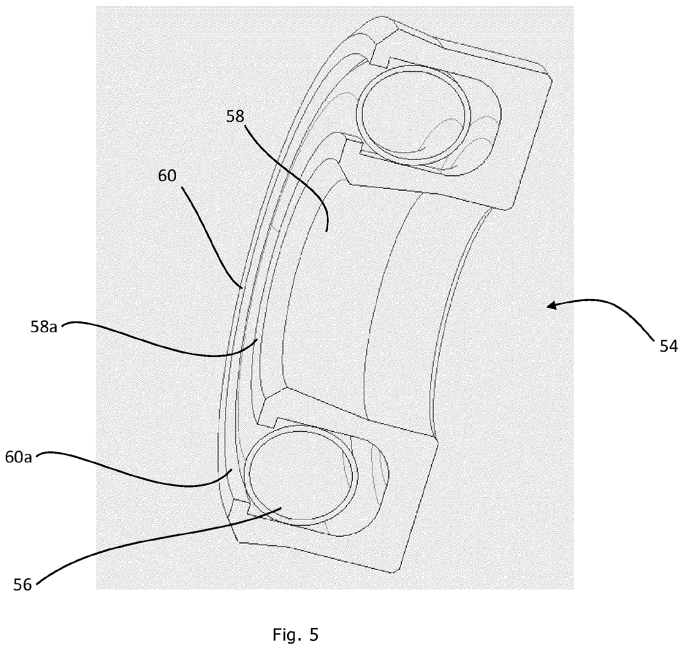

The seal 54a of this embodiment is shown in more detail in Figure 5. As shown in Figure 5, the seal 54 has a resiliently biased component or spring 56. In this embodiment, the spring 56 is a coil spring.

In alternative embodiments, some other type of suitable resiliently biased component 56 is provided. For example, in an embodiment, the resiliently biased component is a cantilever spring.

The spring 56 is contained within the seal 54. The seal 54 has opposing inner and outer walls 58, 60 and is substantially U-shaped in cross-section. The spring 56 is retained between the inner and outer walls 58, 60.

The outer wall 60 has a lip 60a by which the spring 56 is constrained in an axial direction. In this embodiment, the inner wall 58 has a lip 58a by which the spring 56 is constrained in an axial direction. The seal 56 provides a resilient bias in both inward and outward radial directions, so that the seal 54 is held against the cap 38 and the steering knuckle projection 46 to provide an airtight seal and inhibit pressurised air escaping the air flow path 22.

As the spindle 18 is rotatable with respect to the steering knuckle 12, the cap 38 rotates with respect to the seal 54. The resilient biasing of the seal 54 allows relative rotation between the cap 38 and the steering knuckle projection 46 whilst maintaining an airtight seal.

Due to the relative rotation between the spindle 18 and the steering knuckle 12, wear of the seal 54 takes place. The spring 56 ensures that the walls 58, 60 maintain contact with the respective parts of the cap 38 and the steering knuckle projection 46 even as wear takes place. In particular, the resilient bias of the spring 56 ensures that the outer wall 60 remains in sealing contact with the cap 38 despite wear.

The seal 54 is easily replaceable once worn beyond a predetermined point.

There is also provided an O ring seal 62 between the inner wall 58 of the seal 54 and the steering knuckle projection 46. Further inhibition of air leakage from the tire inflation system is thus provided.

Advantageously, the seal 54 provides a simple and effective method of preventing the escape of air from the air flow path 22 into other parts of the wheel hub assembly 10, e.g. the roller bearing 36 of the wheel hub 34.

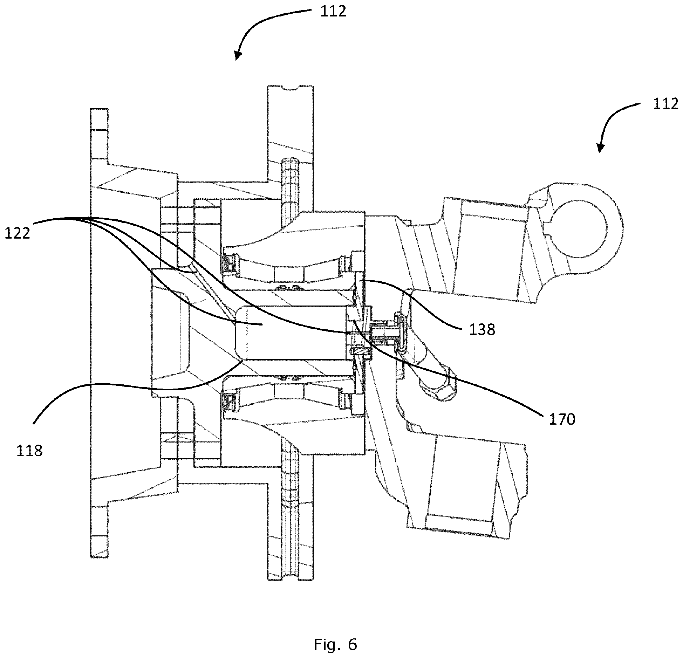

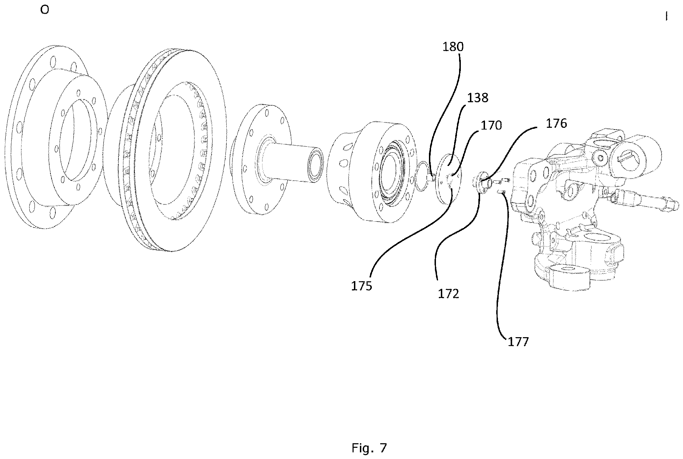

With reference now to Figures 6 to 8, there is disclosed a further embodiment. Only those features different to the first embodiment are discussed in detail. Corresponding reference numbers to those of the previous embodiment have been used, with the addition of a preceding "1".

The spindle 118 of this embodiment is fitted with a cap 138. The cap 138 defines a through bore 170 configured to receive a rotary union 172. The term "rotary union" is used as understood in the art, i.e. a component that allows for relative rotation of the components to which it is connection.

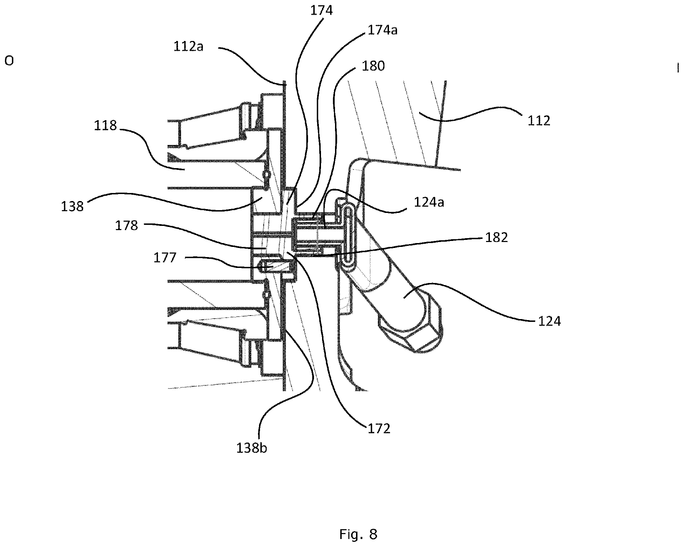

As best shown in Figure 8, the rotary union allows relative rotation of the spindle 118 and the steering knuckle 112, i.e. between the cap 138 and the steering knuckle 112. The rotary union 172 has a radial flange 174 that abuts an inboard face 138b of the cap 138. The flange 174 defines a series of apertures 176 for receiving a fastener 177. Corresponding apertures 175 are defined by the cap 138, and the fasteners 177 are used to secure the rotary union 172 to the cap 138. In this embodiment, three sets of apertures 175, 176 are provided. In alternative embodiments, some other suitable number of apertures is provided.

In this embodiment, the inlet hose 124 has an outboard end 124a received within the rotary union 172. The inlet hose 124 is fixed in relation to the steering knuckle 112. The rotary union 172 defines a through bore 178 that extends through the rotary union 172 between inboard and outboard ends thereof. The bore 178 forms part of the air flow path 122. Air is thus able to flow from the hose 124, through the rotary union 172, and to the rest of the air flow path 122.

The rotary union 172 has a bearing 180 that allows for relative rotation between the steering knuckle 112 and the spindle 118, whilst providing sealing between the steering knuckle 112 and the spindle 118. Clearance is provided between the outboard face 112a of the steering knuckle 112 and an inboard face 174a of the rotary union flange 174, such that wear between the two components is avoided.

The rotary union 172 has a cylindrical tubular projection 182 extending inboard of the flange 174. The projection 182 receives the outboard end 124a of the inlet hose 124. The bearing 180 provides a seal between the rotary union 172 and the inlet hose 124, specifically in this embodiment between the outboard end 124a of the inlet hose 124 and the rotary union 172. In this embodiment, the bearing 180 is located inside the projection 182 of the rotary union 172.

In this embodiment, the bearing 180 is in the form of a roller bearing. The bearing 180 is secured within the projection 182 of the rotary union 172 in an interference fit. In an alternative embodiment, the bearing 180 is a ball bearing, or a bushing.

Advantageously, the rotary union of this embodiment is inboard of the spindle 118, and is protected from damage due to its location away from the exterior of the wheel hub assembly 110. The likelihood of damage of the type which could result in pressurised air leakage is thus reduced. The use of complicated oil-to-air sealing is avoided by the simple sealing arrangement described above in relation to the bearing 180 and the cap 138. As in the previous embodiment, minimal drilling of the spindle casting is required, simplifying manufacture.

Advantageously, the wheel hub assembly of both embodiments described above is integrated with the outboard-mounted rotor, reducing assembly and maintenance time of the vehicle brakes.

## Claims

1. A wheel hub assembly for a non-drive axle of a vehicle having at least one tire, the wheel hub assembly comprising:
a wheel flange for rotatably supporting the tire with respect to a vehicle chassis;
a spindle for supporting the wheel flange; and
an air flow path for supplying pressurised air from an air supply to said tire;
wherein the spindle is rotatable with the wheel flange with respect to the chassis; and
wherein a section of the air flow path is defined by the spindle.

2. The assembly of claim 1, wherein the air flow path extends between an inboard end and an outboard end of the spindle.

3. The assembly of claim 1, wherein the spindle defines a body extending inboard of the wheel flange; wherein the spindle body defines a chamber; and wherein a section of the air flow path is defined by the chamber.

4. The assembly of claim 3, wherein the assembly comprises a wheel hub, wherein the wheel hub is configured to be non-rotatable with respect to the chassis; and wherein the spindle body is rotatably supported by the hub.

5. The assembly of claim 4, wherein the chassis comprises a steering knuckle, wherein the spindle is rotatable with respect to the steering knuckle, and wherein the wheel hub is configured to be secured to the steering knuckle, such that the wheel hub is fixed in relation to the steering knuckle.

6. The assembly of claim 4, wherein the spindle body is substantially cylindrical; preferably wherein an inboard end of the spindle body is open, such that the spindle body defines an aperture at an inboard end thereof.

7. The assembly of claim 6, wherein the spindle comprises a cap for sealing the aperture, wherein the cap is rotatable with the spindle, preferably wherein the cap defines a section of the air flow path; optionally wherein the spindle body comprises an inboard end face, and wherein the cap extends over the inboard end face; optionally further comprising a seal between the cap and the inboard end face; preferably wherein the seal is an O ring.

8. The assembly of claim 7, wherein the wheel hub comprises a roller bearing configured to rotatably support the spindle within the wheel hub, and wherein the cap extends over an inboard end of an inner part of the roller bearing.

9. The assembly of claim 7, wherein the chassis comprises a steering knuckle, wherein the spindle is rotatable with respect to the steering knuckle, and wherein the assembly further comprises a seal between the spindle and the steering knuckle, preferably wherein the seal is between the cap and the steering knuckle, optionally wherein the steering knuckle comprises an outboard extension, and wherein the seal is located between the outboard extension and the spindle.

10. The assembly of claim 9, wherein the seal is resiliently biased in a radially outward direction; preferably wherein the seal is resiliently biased in a radially inward direction.

11. The assembly of claim 10, wherein the seal comprises a resilient biasing component, preferably wherein the resilient biasing component is a cantilever spring, or wherein the resilient biasing component is a coil spring.

12. The assembly of claim 1, further comprising a rotary union between the spindle and the chassis; preferably wherein the rotary union is inboard of the spindle; optionally wherein the chassis comprises a steering knuckle, wherein the spindle is rotatable with respect to the steering knuckle, and wherein the rotary union is between the spindle and the steering knuckle.

13. The assembly of claim 12, wherein the spindle comprises a cap, and wherein the rotary union is between the cap and the steering knuckle.

14. The assembly of claim 12, wherein the rotary union defines a section of the air flow path.

15. The assembly of claim 1, wherein the wheel hub assembly is for a heavy vehicle, or wherein the wheel hub assembly is for a medium duty vehicle.
